# EUROPEAN PATENT APPLICATION

(11) **EP 4 660 048 A2**
(43) Date of publication of application: **10.12.2025**
(21) Application number: 25210165.4
(22) Date of filing: 20.09.2018
(51) Int. Cl.: B62B 7/06

(54) **CHILD STROLLER APPARATUS**

(30) Priority: 20.09.2017 CN 201710854623; 24.10.2017 CN 201711002973
(62) Divisional of application: 23180435.2
(71) Applicant: Wonderland Switzerland AG, 6312 Steinhausen (CH)
(72) Inventor: DUAN, Xiao Song, Dongguan (CN); ZENG, Haibo, Dongguan (CN); LI, Fang Ming, Dongguan (CN)
(74) Representative: Zimmermann & Partner Patentanwälte mbB

(57) **Abstract**

A child stroller apparatus (100) includes a first and a second leg frame (102, 104), a first and a second seat support frame (108, 110), a locking mechanism (140) operable to lock the child stroller apparatus (100) in an unfolded state, an impeding part (178) and an actuating part (182). The first and second seat support frames (108, 110) are pivotally coupled to each other and are respectively coupled pivotally to the first and second leg frame (102, 104), wherein the first seat support frame (108) and the second seat support frame (110) respectively include a seat portion (124) and a side segment (110A) that are pivotally coupled to each other. The locking mechanism (140) includes a latch (144) that is connected with the seat portion (124) and is slidable to an underside of the side segment (110A) for locking the child stroller apparatus (100) in the unfolded state and is slidable away from the underside of the side segment (110A) for folding of the child stroller apparatus (100). The impeding part (178) is connected with the seat portion (124) and is movable between a blocking state and a release state, the impeding part (178) interfering with the locking mechanism (140) in the blocking state to prevent the latch (144) from sliding away from the underside of the side segment (110A), and the impeding part (178) in the release state allowing the latch (144) to slide away from the underside of the side segment (110A). The actuating part (182) is movably assembled with the seat portion (124) and exposed upward for operation through an opening (124C) provided on an upper surface of the seat portion (124), wherein the opening (124C) and the actuating part (182) are disposed at a middle position between a left and a right side edge of the seat portion (124), the actuating part (182) being depressible to urge the impeding part (178) to move from the blocking state to the release state.

## Description

### CROSS-REFERENCE TO RELATED APPLICATION(S)

This application is a divisional application of EP application no. 23180435.2 filed on June 20, 2023, which is a divisional application of EP application no. 21166053.5 filed on March 30, 2021, which is a divisional patent application of EP application no. 18195723.4 filed on September 20, 2018, which respectively claims priority to China application no. 201710854623.9 filed on September 20, 2017, and to China application no. 201711002973.9 filed on October 24, 2017.

### BACKGROUND

### 1. Field of the Invention

The present invention relates to child stroller apparatuses.

### 2. Description of the Related Art

A child stroller apparatus can be used to conveniently transport babies and children. When it is not used, the child stroller apparatus can be folded for facilitating its storage or transport. In this regard, the folding mechanism provided in the child stroller apparatus has to be safe, and provide convenient operation under various conditions of use without affecting the outer appearance of the child stroller apparatus. Presently, some existing child stroller apparatus connects a strap with a locking device of the folding mechanism, the strap being pulled to unlock the locking device for folding of the child stroller apparatus. Because the strap is flexible and transversally extends across a seating region of the child stroller apparatus, accidental operation of the strap may occur.

Therefore, there is a need for a foldable child stroller apparatus that is convenient to operate, safe in use and address at least the foregoing issues.

### SUMMARY

The present application describes a child stroller apparatus. The child stroller apparatus includes a first and a second leg frame, a first and a second seat support frame, a locking mechanism, an impeding part and an actuating part. The first seat support frame is pivotally coupled to the first leg frame, the second seat support frame is pivotally coupled to the second leg frame, and the first and second seat support frames are pivotally coupled to each other, whereby the child stroller apparatus has a foldable frame structure, wherein the first seat support frame includes a seat portion, and the second seat support frame includes a side segment that is pivotally coupled to the seat portion. The locking mechanism is operable to lock the child stroller apparatus in an unfolded state, wherein the locking mechanism includes a latch slidably connected with the seat portion, the latch being slidable to an underside of the side segment for locking the child stroller apparatus in the unfolded state and slidable away from the underside of the side segment for folding of the child stroller apparatus. The impeding part is connected with the seat portion, and is movable relative to the seat portion between a blocking state and a release state, the impeding part interfering with the locking mechanism in the blocking state to prevent the latch from sliding away from the underside of the side segment, and the impeding part in the release state allowing the latch to slide away from the underside of the side segment for unlocking and folding of the child stroller apparatus. The actuating part is movably assembled with the seat portion and exposed upward for operation through an opening provided on an upper surface of the seat portion, wherein the opening and the actuating part are disposed at a middle position between a left and a right side edge of the seat portion, the actuating part being depressible to urge the impeding part to move from the blocking state to the release state.

### BRIEF DESCRIPTION OF THE DRAWINGS

FIG. 1 is a perspective view illustrating an embodiment of a child stroller apparatus;
FIG. 2 is a bottom view illustrating the child stroller apparatus;
FIGS. 3 and 4 are two perspective views under different angles of views illustrating an assembly of two seat support frames in the child stroller apparatus shown in FIG. 1;
FIG. 5 is a cross-sectional view illustrating a locking mechanism and a safety lock mechanism provided on the assembly of the two seat support frames;
FIG. 6 is a cross-sectional view illustrating the safety lock mechanism shown in FIG. 5 in a release state;
FIG. 7 is a perspective view illustrating the safety lock mechanism shown in FIG. 5 in the release state;
FIG. 8 is a cross-sectional view illustrating exemplary unlocking operation of the locking mechanism while the safety lock mechanism is in the release state;
FIG. 9 is a perspective view illustrating exemplary unlocking operation of the locking mechanism while the safety lock mechanism is in the release state;
FIG. 10 is a top view illustrating another embodiment of a safety lock mechanism provided on the assembly of the two seat support frames in the child stroller apparatus;
FIG. 11 is a perspective view illustrating the two seat support frames and the safety lock mechanism of the embodiment shown in FIG. 10;
FIG. 12 is a bottom view illustrating further construction details of the safety lock mechanism of the embodiment shown in FIG. 10;
FIG. 13 is a cross-sectional view of the safety lock mechanism shown in FIG. 12;
FIG. 14 is a top view illustrating another embodiment of a safety lock mechanism provided on the assembly of the two seat support frames in the child stroller apparatus;
FIG. 15 is a perspective view illustrating the two seat support frames and the safety lock mechanism of the embodiment shown in FIG. 14;
FIG. 16 is a side view illustrating some construction details of the safety lock mechanism of the embodiment shown in FIG. 14; and
FIG. 17 is a cross-sectional view illustrating some construction details of the safety lock mechanism of the embodiment shown in FIG. 14.

### DETAILED DESCRIPTION OF THE EMBODIMENTS

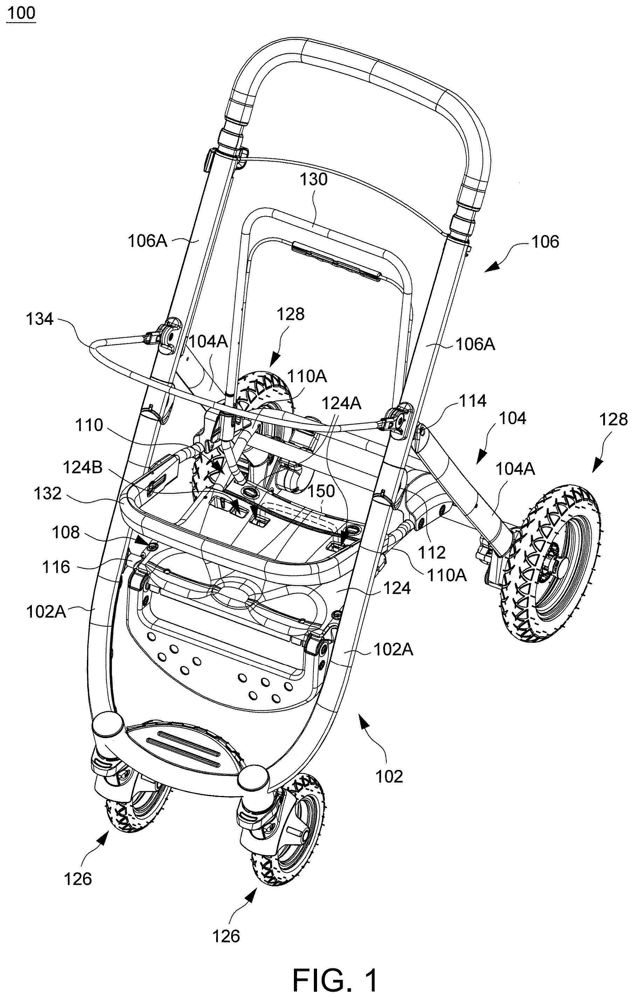

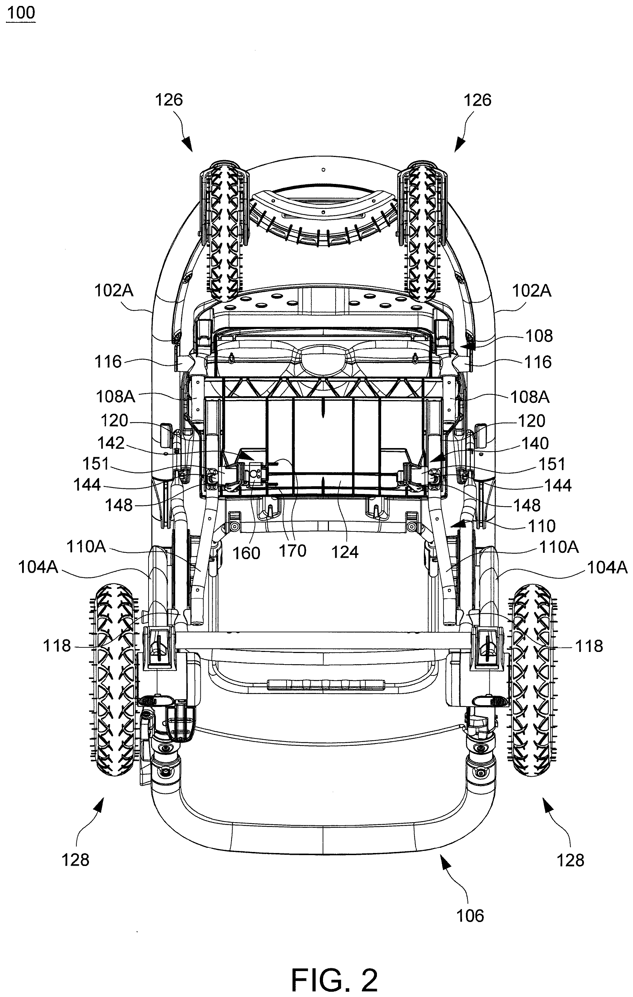

FIG. 1 is a perspective view illustrating an embodiment of a child stroller apparatus 100, and FIG. 2 is a bottom view illustrating the child stroller apparatus 100. Referring to FIGS. 1 and 2, the child stroller apparatus 100 can include two leg frames 102 and 104, a handle frame 106, and two seat support frames 108 and 110. The leg frames 102 and 104 can be respectively a front and a rear leg frame. The seat support frames 108 and 110 can be respectively a front and a rear seat support frame. The handle frame 106 can be pivotally coupled to the leg frame 102 via two pivot connections 112, and can be pivotally coupled to the leg frame 104 via two pivot connections 114. The seat support frame 108 can be pivotally coupled to the leg frame 102 via two pivot connections 116, the seat support frame 110 can be pivotally coupled to the leg frame 104 via two pivot connections 118, and the seat support frames 108 and 110 can further be pivotally coupled to each other via two pivot connections 120. The child stroller apparatus 100 can thereby have a foldable frame structure.

According to an example of construction, the leg frames 102 and 104, the handle frame 106 and the seat support frame 110 can respectively have symmetric side segments disposed at a left and a right side. For example, the leg frame 102 can have two side segments 102A, the leg frame 104 can have two side segments 104A, the handle frame 106 can have two side segments 106A, and the seat support frame 110 can have two side segments 110A. The seat support frame 108 can include a seat portion 124 and two side segments 108A. The seat portion 124 can exemplary have a plate shape. The two side segments 108A can be symmetrically disposed at a left and a right side, and can be respectively connected fixedly with the seat portion 124. Each side segment 106A of the handle frame 106 can be pivotally coupled to one side segment 102A of the leg frame 102 via one pivot connection 112, and can be pivotally coupled to one side segment 104A of the leg frame 104 via one pivot connection 114, whereby the handle frame 106 can respectively rotate about the pivot connections 112 and 114 relative to the leg frames 102 and 104. Moreover, each side segment 102A of the leg frame 102 can be pivotally coupled to one side segment 108A of the seat support frame 108 via one pivot connection 116, each side segment 104A of the leg frame 104 can be pivotally coupled to one side segment 110A of the seat support frame 110 via one pivot connection 118, and the seat portion 124 of the seat support frame 108 can be respectively coupled pivotally to the two side segments 110A of the seat support frame 110 via the two pivot connections 120. With the aforementioned construction, the leg frames 102 and 104, the handle frame 106, and the seat support frames 108 and 110 can rotate relative to one another in a coupled manner between an unfolded state and a folded state. In the unfolded state, the seat portion 124 can be supported at least partially by the side segments 108A and 110A and can extend thereon, the pivot connections 112 and 114 can be located above the pivot connections 116 and 118, and the pivot connections 114 can be located above the pivot connections 112. Moreover, the leg frames 102 and 104 can have lower portions respectively provided with wheels 126 and 128 for movement of the child stroller apparatus 100 on a floor surface.

Referring to FIG. 1, the child stroller apparatus 100 can further include a backrest frame 130, a guard bar 132 and a canopy frame 134. The backrest frame 130 can be pivotally coupled to a rear of the seat portion 124. The guard bar 132 can be generally U-shaped, and can be respectively coupled pivotally to the two side segments 102A of the leg frame 102 and the two side segments 104A of the leg frame 104. The canopy frame 134 can be respectively connected with the two side segments 106A of the handle frame 106.

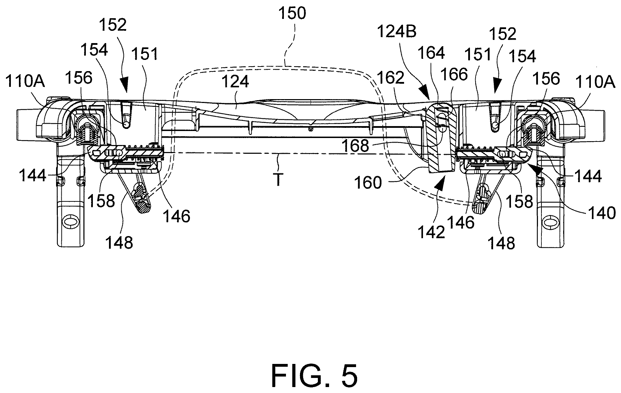

In conjunction with FIGS. 1 and 2, FIGS. 3 and 4 are perspective views illustrating the assembly of the seat support frames 108 and 110 under different angles of views, and FIG. 5 is a cross-sectional view illustrating a locking mechanism 140 and a safety lock mechanism 142 provided on the seat support frame 108. The locking mechanism 140 can lock the child stroller apparatus 100 in the unfolded state, and the safety lock mechanism 142 is provided to prevent accidental unlocking of the locking mechanism 140 for safer use. Referring to FIGS. 1-5, the locking mechanism 140 can include two latches 144, two springs 146, two driving parts 148 and a release actuator 150 (shown with phantom lines). The latches 144, the springs 146 and the driving parts 148 can be assembled at an underside of the seat portion 124, and can be symmetrically disposed at a left and a right side of the seat support frame 108 respectively adjacent to the side segments 110A of the seat support frame 110.

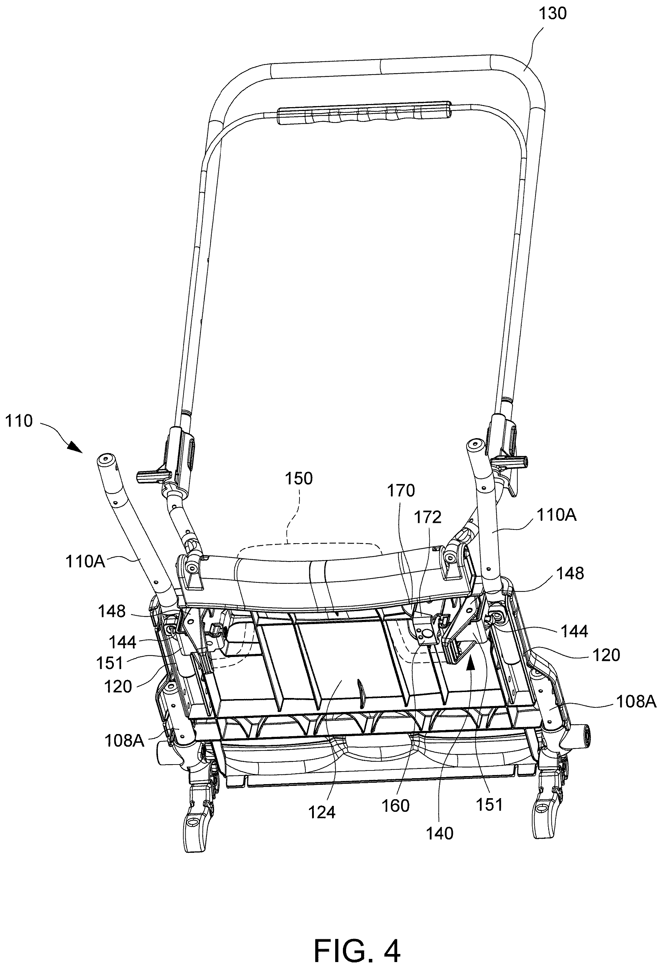

Referring to FIGS. 4 and 5, the latches 144 can be slidably connected with the seat portion 124 at an underside of the seat portion 124. According to an example of construction, the underside of the seat portion 124 can be fixedly connected with two brackets 151 respectively disposed at a left and a right side of the seat portion 124, and the two latches 144 can be respectively connected slidably with the two brackets 151, whereby the two latches 144 can slide along a transversal axis T of the seat portion 124. The brackets 151 may be formed integrally with the seat portion 124, or fixedly attached to the seat portion 124 via fasteners. When the child stroller apparatus 100 is in the unfolded state shown in FIGS. 1 and 2, the two latches 144 can slide away from each other and respectively engage with an underside of the two side segments 110A, which can prevent the seat support frame 110 from rotating about the pivot connections 120 relative to the seat support frame 108 and thereby lock the child stroller apparatus 100 in the unfolded state. Moreover, the two latches 144 can slide toward each other and respectively disengage from the underside of the two side segments 110A, which can unlock the child stroller apparatus 100 and allow the seat support frame 110 to rotate about the pivot connections 120 relative to the seat support frame 108 for folding of the child stroller apparatus 100.

Each spring 146 can respectively connected with one latch 144 and one bracket 151 associated therewith, and can bias the latch 144 to engage with the underside of the side segment 110A for keeping the locking mechanism 140 in a locking state. Locking of the child stroller apparatus 100 in the unfolded state can be thereby facilitated.

Each driving part 148 can be respectively connected with one latch 144 and one bracket 151 associated therewith. Referring to FIG. 5, according to an example of construction, the bracket 151 can have a slot 152, and the driving part 148 can be fixedly connected with a pin 154 that is pivotally received through the slot 152. The driving part 148 can be thereby pivotally connected with the seat portion 124 about a pivot axis 155 that extends from a front to a rear of the seat portion 124. Moreover, the latch 144 can have a guide slot 156, and another pin 158 fixedly connected with the driving part 148 at a distance apart from the pin 154 can be slidably received through the guide slot 156.

The release actuator 150 can extend transversally, and have two opposite ends respectively connected with the two driving parts 148. According to an example of construction, the release actuator 150 can be a strap, and can extend from an underside to an upper side of the seat portion 124 through two openings 124A provided in the seat portion 124. The release actuator 150 can be pulled upward by a caregiver to drive the two driving parts 148 to rotate concurrently, which in turn can respectively urge the two latches 144 to slide toward each other along the transversal axis T against the biasing forces of the springs 146 and thereby disengage from the underside of the side segments 110A for unlocking and folding of the child stroller apparatus 100.

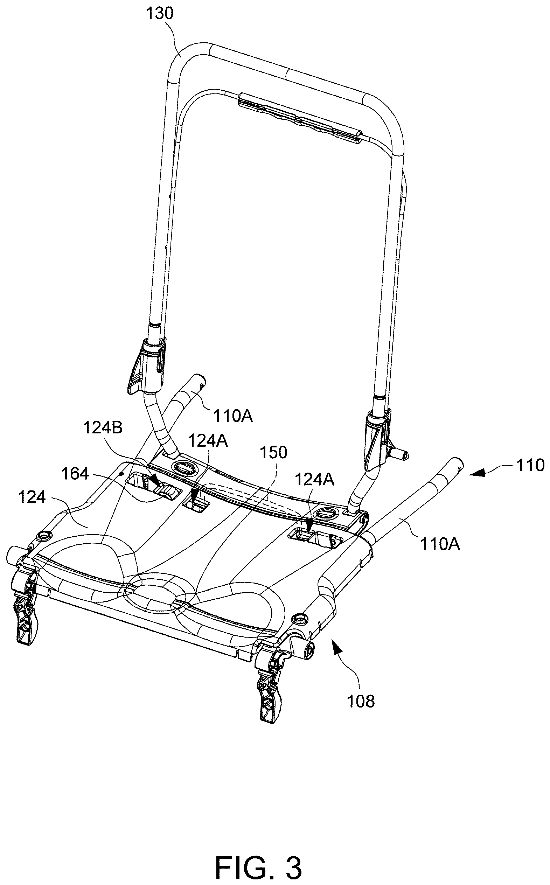

Referring to FIGS. 3-5, the safety lock mechanism 142 can include an impeding part 160, a spring 162 and an actuating part 164. The impeding part 160 can be movably connected with the seat portion 124 of the seat support frame 108 adjacent to one of the two latches 144. According to an embodiment, the seat portion 124 of the seat support frame 108 can have an opening 124B, and the impeding part 160 can be slidably and rotatably connected with the seat portion 124 through the opening 124B. For example, the impeding part 160 can have a guide slot 166 of an elongate shape, and a pin 168 fixedly connected with the seat portion 124 can be received through the guide slot 166, whereby the impeding part 160 can slide upward and downward relative to the seat portion 124 and rotate about the pin 168. Moreover, the seat portion 124 can be fixedly connected with two stop walls 170 that are disposed adjacent to the impeding part 160, and a lower end of the impeding part 160 can be provided with two flanges 172 respectively disposed at two opposite sides of the impeding part 160.

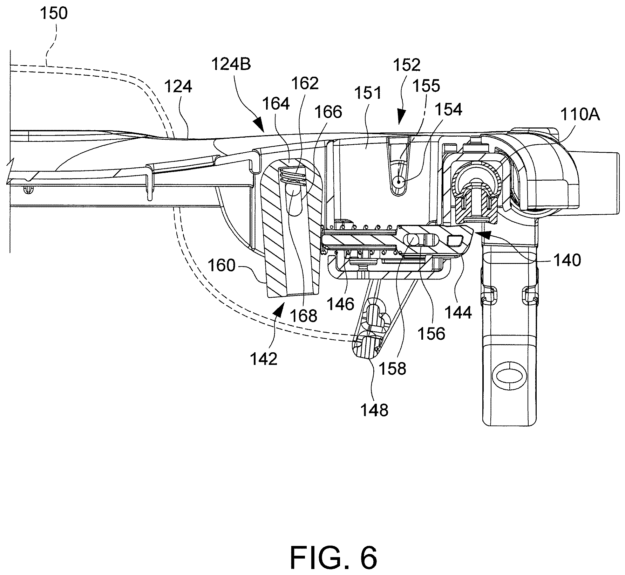

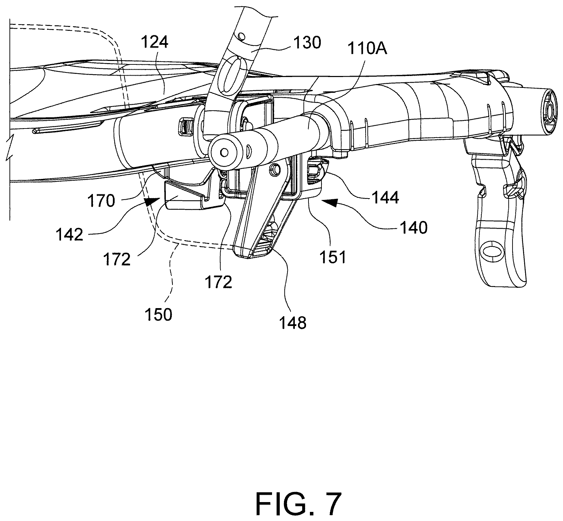

The impeding part 160 can slide upward and downward relative to the seat portion 124 and the stop walls 170 between a blocking state shown in FIGS. 4 and 5 and a release state shown in FIGS. 6 and 7. In the blocking state shown in FIGS. 4 and 5, the impeding part 160 can interfere with the locking mechanism 140 and prevent the two latches 144 from respectively sliding away from the underside of the two side segments 110A. In the release state, the impeding part 160 allows the two latches 144 to slide away from the underside of the two side segments 110A for unlocking and folding of the child stroller apparatus 100.

More specifically, the flanges 172 of the impeding part 160 can respectively engage with the stop walls 170 in the blocking state shown in FIGS. 4 and 5, which can prevent the impeding part 160 from rotating toward an inner side of the seat portion 124 and away from an inner end of the latch 144. As a result, the impeding part 160 can face and abut against the inner end of the latch 144, which can prevent the latch 144 from sliding away from the underside of the side segment 110A.

When the impeding part 160 slides downward from the blocking state to the release state shown in FIGS. 6 and 7, the flanges 172 of the impeding part 160 can respectively disengage from the stop walls 170, whereby the impeding part 160 can rotate toward the inner side of the seat portion 124 and provide clearance for sliding of the latch 144 away from the underside of the side segment 110A. A portion of the impeding part 160 located above the flanges 172 can move through a gap between the two stop walls 170 as the impeding part 160 rotates toward the inner side of the seat portion 124.

Referring to FIG. 5, the spring 162 can be respectively connected with the seat portion 124 and the impeding part 160. According to an example of construction, the spring 162 can be exemplary disposed in a hollow cavity provided in the impeding part 160, and can have two opposite ends respectively connected with a protrusion 168 provided on the seat portion 124 and an inner sidewall of the impeding part 160. The spring 162 can thereby bias the impeding part 160 toward the blocking state.

The actuating part 164 can be provided on the seat support frame 108. More specifically, the actuating part 164 can be connected with the impeding part 160, and can be exposed upward for operation through an opening 124B provided on an upper surface of the seat portion 124. According to an example of construction, the actuating part 164 can be fixedly connected with the impeding part 160, e.g., the impeding part 160 and the actuating part 164 can be formed integrally as a single part. Moreover, the actuating part 164 can have a top generally flush with the upper surface of the seat portion 124. A caregiver can press the actuating part 164 downward to urge the impeding part 160 to move from the blocking state to the release state. According to an example of construction, the actuating part 164 and the opening 124B can be disposed adjacent to a rear edge of the seat portion 124 so as to reduce the risk of accidental operation of the actuating part 164.

Reference is made hereinafter to FIGS. 1-9 for describing exemplary operation of the safety lock mechanism 142.

Referring to FIGS. 1, 2, 4 and 5, when the latch 144 is positioned below the side segment 110A and locks the child stroller apparatus 100 in the unfolded state, the impeding part 160 can be kept in the blocking state abutting against the inner end of the latch 144 owing to the biasing force of the spring 162. While the impeding part 160 is in the blocking state, a top of the actuating part 164 can be generally flush with the upper surface of the seat portion 124. Since the actuating part 164 does not excessively protrude above the upper surface of the seat portion 124, accidental operation may be prevented. In case a caregiver pulls the release actuator 150 while the impeding part 160 is in the blocking state, the inner end of the latch 144 would tend to push the impeding part 160 in rotation toward the inner side of the seat portion 124. However, the contact between the stop walls 170 and the flanges 172 of the impeding part 160 can prevent rotation of the impeding part 160 toward the inner side of the seat portion 124. As a result, the impeding part 160 can be maintained in the blocking state, which prevents the latch 144 adjacent thereto from sliding away from its locking position below the side segment 110A. The safety lock mechanism 142 can thereby effectively prevent the latch 144 from accidentally unlocking the child stroller apparatus 100.

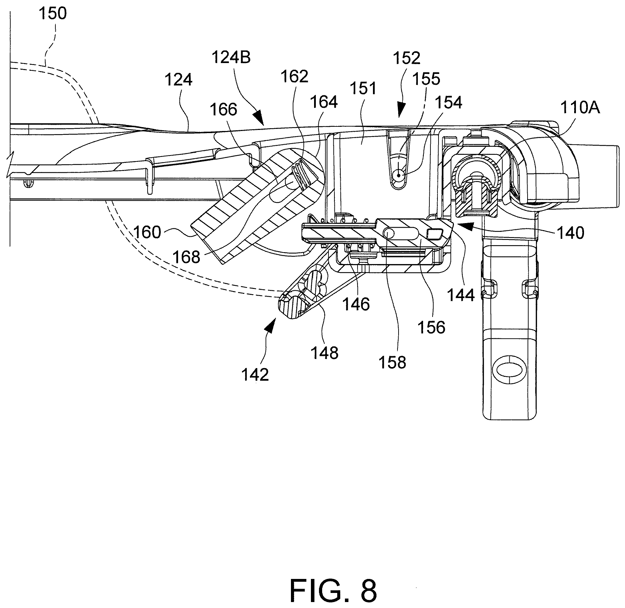

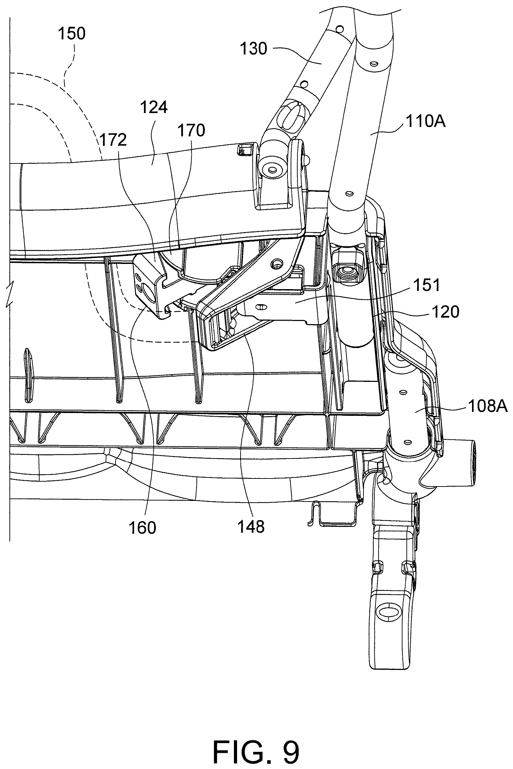

Referring to FIGS. 6 and 7, when the child stroller apparatus 100 is to be folded, a caregiver needs to proceed with two operating steps: pressing the actuating part 164 to movably switch the impeding part 160 from the blocking state to the release state, and then pull the release actuator 150 while the impeding part 160 remains in the release state so as to urge each latch 144 to move from the locking position to an unlocking position. According to an example of construction, the actuating part 164 and the opening 124B can be disposed adjacent to an opening 124A through which passes the release actuator 150 so that a caregiver can conveniently press the actuating part 164 and pull the release actuator 150 in parallel. As shown in FIGS. 8 and 9, the flanges 172 of the impeding part 160 are respectively disengaged from the stop walls 170 in the release state of the safety lock mechanism 142. As a result, the inner end of the latch 144 adjacent thereto can push the impeding part 160 in rotation toward the inner side of the seat portion 124, and the latch 144 can slide relative to the seat portion 124 without obstruction from the locking position to the unlocking position. After the latch 144 unlocks, the caregiver may release the actuating part 164, and the latch 144 in the unlocking position can keep the impeding part 160 in the release state. Subsequently, the caregiver can lift the child stroller apparatus 100 above a floor surface with the release actuator 150, and the child stroller apparatus 100 then can fold with the assistance of gravity action.

When the child stroller apparatus 100 is unfolded, each latch 144 can slide to the locking position below the side segment 110A owing to the biasing force of the spring 146 coupled thereto. In the meantime, the impeding part 160 can move from the release state to the blocking state owing to the biasing force of the spring 162.

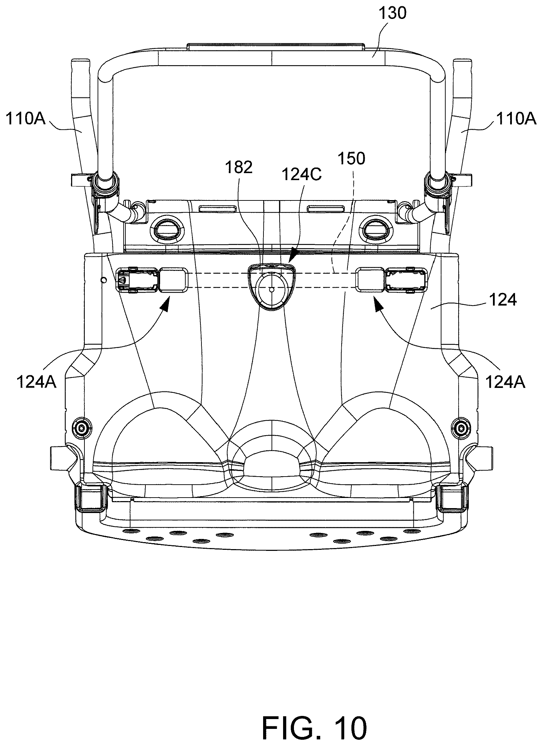

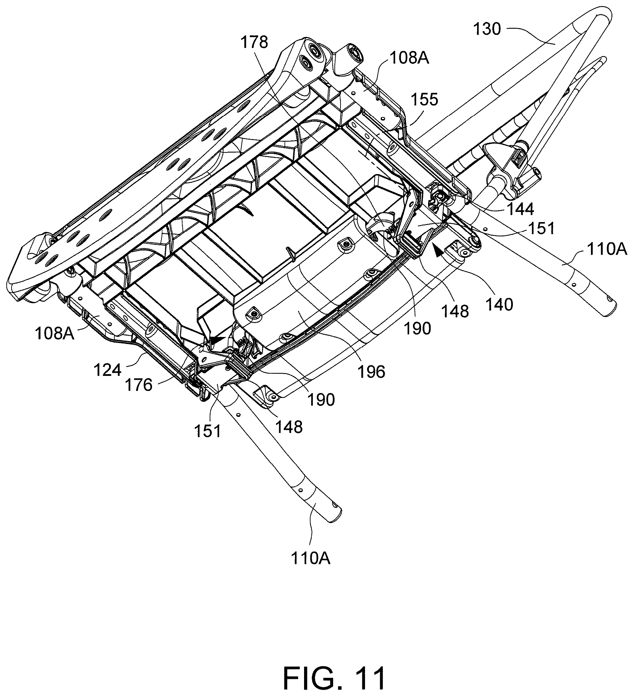

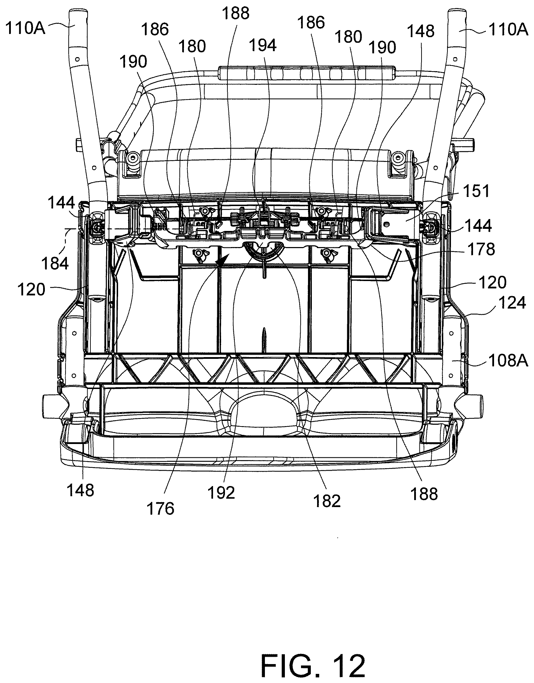

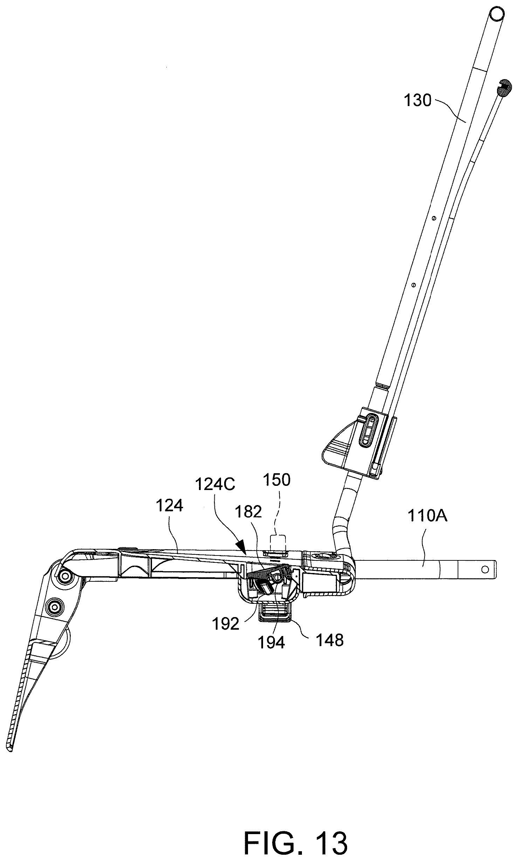

FIGS. 10-13 are schematic views illustrating another embodiment of a safety lock mechanism 176 provided on the seat support frame 108. More specifically, FIG. 10 is a top view of the seat support frame 108 with the safety lock mechanism 176 provided thereon. FIG. 11 is a perspective view of the seat support frame 108 with the safety lock mechanism 176 provided thereon. FIG. 12 is a bottom view of the safety lock mechanism 176 provided on the seat support frame 108. FIG. 13 is a cross-sectional view illustrating the safety lock mechanism 176. In the embodiment of FIGS. 10-13, the seat support frame 108 can further include the locking mechanism 140 described previously for locking the child stroller apparatus in the unfolded state. Referring to FIGS. 10-13, the safety lock mechanism 176 can include an impeding part 178, a spring 180 and an actuating part 182.

The impeding part 178 can extend along a width direction of the seat portion 124, and can be pivotally connected with the seat portion 124 about a pivot axis 184 that extends transversally relative to the seat portion 124 from a left to a right side thereof. According to an example of construction, the impeding part 178 can have one or more ear portion 186, and one or more shaft portions 188 fixedly connected with the seat portion 124 at an underside thereof can be respectively disposed through the corresponding ear portion 186 so as to pivotally connect the impeding part 178 with the seat portion 124. Moreover, two opposite ends of the impeding part 178 can respectively have two stop portions 190 disposed eccentric from the pivot axis 184. The two stop portions 190 can be fixedly connected with the impeding part 178.

The impeding part 178 can rotate relative to the seat portion 124 between a blocking state and a release state. Like previously described, the impeding part 178 in the blocking state can interfere with the locking mechanism 140 and prevent the two latches 144 from respectively sliding away from the underside of the two side segments 110A. In the release state, the impeding part 178 allows the two latches 144 to slide away from the underside of the two side segments 110A for unlocking and folding of the child stroller apparatus 100. More specifically, the two stop portions 190 of the impeding part 178 in the blocking state can respectively face and abut against the inner ends of the two latches 144, which can prevent the two latches 144 from respectively sliding away from the underside of the side segments 110A. When the impeding part 178 rotates from the blocking state to the release state, the two stop portions 190 can be displaced out of the respective sliding paths of the latches 144, whereby the latches 144 can slide toward the inner side of the seat portion 124 and away from the underside of the side segments 110A for unlocking and folding of the child stroller apparatus 100.

Referring to FIG. 12, the spring 180 can be respectively connected with the impeding part 178 and the seat portion 124. According to an example of construction, the spring 180 can be a torsion spring disposed around one shaft portion 188. The spring 180 can rotationally bias the impeding part 178 toward the blocking state.

Like in the previous embodiment, the actuating part 182 can be provided on the seat support frame 108. More specifically, the actuating part 182 can be movably assembled with the seat portion 124, and can be exposed upward for operation through an opening 124C provided on an upper surface of the seat portion 124. According to an example of construction, the actuating part 182 can be pivotally connected with the seat portion 124 about a pivot axis different from the pivot axis 184 of the impeding part 178. It will be appreciated, however, that the actuating part 182 may be assembled in a different manner, e.g., the actuating part 182 may be slidably connected with the seat portion 124. Moreover, the actuating part 182 is operatively connected with the impeding part 178, so that the actuating part 182 is depressible to urge the impeding part 178 to move from the blocking state to the release state. For example, the application of a pressure on the actuating part 182 can cause the actuating part 182 to contact with a central portion 192 of the impeding part 178 and urge its rotation to the release state.

According to an example of construction, the opening 124C and the actuating part 182 can be disposed at a middle position between a left and a right side edge of the seat portion 124. Moreover, the opening 124C and the actuating part 182 can be placed adjacent to a rear edge of the seat portion 124 so as to reduce the risk of accidental operation of the actuating part 182.

According to an example of construction, the safety lock mechanism 176 can further include a restore spring 194 respectively connected with the actuating part 182 and the seat portion 124. When the actuating part 182 is released and is not operated by a caregiver, the restore spring 194 can urge the actuating part 182 to recover an initial position.

As shown in FIG. 11, an underside of the seat portion 124 can further be fixedly connected with a cover 196 that can enclose at least partially the safety lock mechanism 176.

Reference is made hereinafter to FIGS. 10-13 for describing exemplary operation of the safety lock mechanism 176.

When the latch 144 is positioned below the side segment 110A and locks the child stroller apparatus in the unfolded state, the impeding part 178 can be kept in the blocking state abutting against the inner end of the latch 144 owing to the biasing force of the spring 180. While the impeding part 178 is in the blocking state, a top of the actuating part 182 can be generally flush with the upper surface of the seat portion 124. Since the actuating part 182 does not excessively protrude above the upper surface of the seat portion 124, accidental operation may be prevented. In case a caregiver pulls the release actuator 150 while the impeding part 178 is in the blocking state, the inner end of each latch 144 would be stopped against the stop portion 190 of the impeding part 178 adjacent thereto. Each latch 144 can be thereby prevented from sliding away from its locking position below the side segment 110A.

When the child stroller apparatus is to be folded, a caregiver needs to proceed with two operating steps: pressing the actuating part 182 (as shown in FIG. 13) to rotationally switch the impeding part 178 from the blocking state to the release state, and then pull the release actuator 150 while the impeding part 178 remains in the release state so that each latch 144 is urged to move from the locking position to the unlocking position. After the latches 144 unlock, the caregiver may release the actuating part 182, and each latch 144 in the unlocking position can contact and keep the impeding part 178 in the release state.

When the child stroller apparatus is unfolded, each latch 144 can slide to the locking position below the side segment 110A owing to the biasing force of the spring coupled thereto. In the meantime, the impeding part 178 can move from the release state to the blocking state owing to the biasing force of the spring 180.

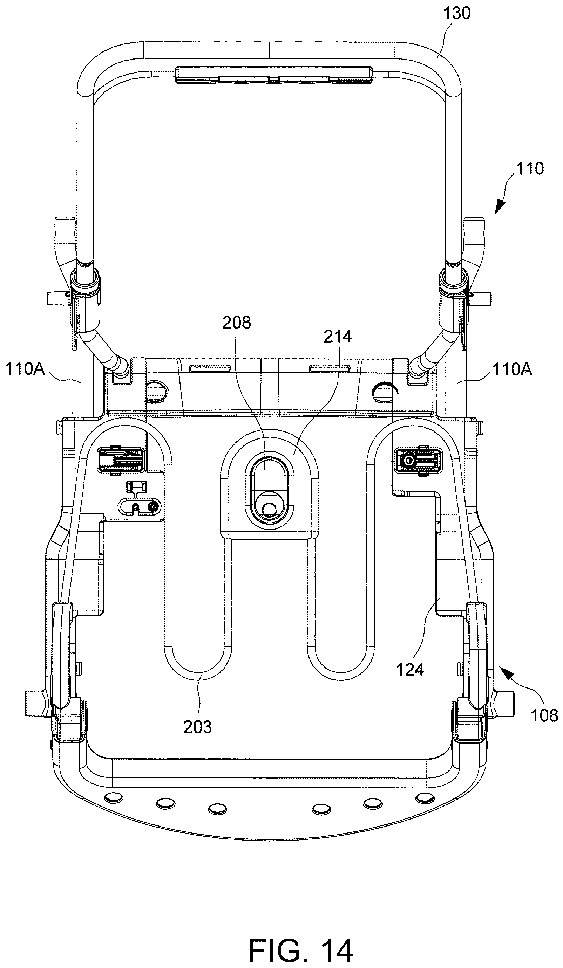

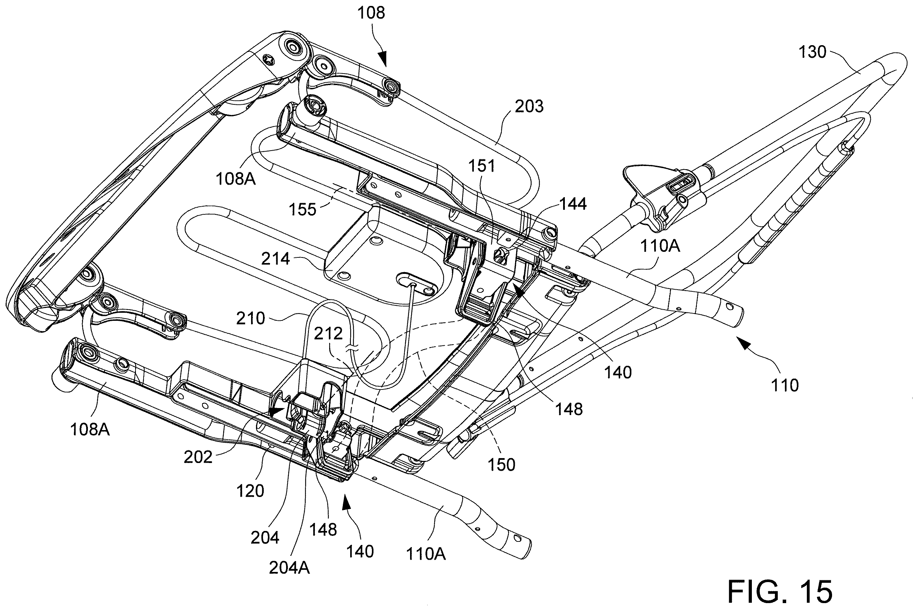

FIGS. 14-17 are schematic views illustrating another embodiment of a safety lock mechanism 202 provided on the seat support frame 108. In the embodiment of FIGS. 14-17, the seat support frame 108 can likewise include the seat portion 124 and the two side segments 108A. The two side segments 108A can be symmetrically disposed at the left and right sides of the seat portion 124 and can be fixedly connected therewith. Moreover, the seat portion 124 of the seat support frame 108 can be respectively coupled pivotally to the two side segments 110A of the seat support frame 110 via the two pivot connections 120. Like previously described, the two seat support frames 108 and 110 can further be respectively coupled pivotally to the two leg frames 102 and 104 (as shown in FIG. 1), and the backrest frame 130 can be pivotally coupled to the rear of the seat portion 124. Although FIGS. 14 and 15 illustrate an exemplary construction in which the seat portion 124 has a U-shape, it will be appreciated, however, that the seat portion 124 may have any suitable shapes.

Referring to FIGS. 14-17, the seat support frame 108 can further include a resilient part 203 having a linear profile. The resilient part 203 can be fixedly attached to the seat portion 124, and can extend above the seat portion 124. The resilient part 203 can have a plurality of bent portions, and can be made of any materials capable of elastic deformation such as steel or plastics. When a child sits on the seat support frame 108, the resilient part 203 can provide cushioned sitting support for the child.

Referring to FIG. 15, the seat support frame 108 can further include the locking mechanism 140 for locking the child stroller apparatus in the unfolded state. The locking mechanism 140 can have a construction similar to the previous embodiments, including the two latches 144, the two driving parts 148 and the release actuator 150 (shown with phantom lines). The latches 144 and the driving parts 148 can be respectively disposed at the underside of the seat portion 124, and can be assembled like in the previous embodiments. More specifically, the latches 144 can be slidably assembled with the seat portion 124, and can respectively slide to engage with the underside of the two side segments 110A for locking the child stroller apparatus in the unfolded state. A spring action (e.g., using the springs 146 shown in FIG. 6) can be provided to bias and keep each latch 144 in its locking position below the side segment 110A. Each driving part 148 can be pivotally connected with the seat portion 124 about the pivot axis 155 extending from the front to the rear of the seat portion 124, and can be operatively connected with one corresponding latch 144. The release actuator 150 can be respectively connected with the two driving parts 148, and can extend above the seat portion 124. The release actuator 150 can be pulled upward by a caregiver to drive the two driving parts 148 to rotate concurrently, which in turn can respectively urge the two latches 144 to slide and disengage from the underside of the side segments 110A for unlocking and folding of the child stroller apparatus.

Referring to FIGS. 14-17, the safety lock mechanism 202 is provided to prevent accidental unlocking of the locking mechanism 140. The safety lock mechanism 202 can include an impeding part 204, a spring 206, an actuating part 208 and a drawing part 210. The impeding part 204 can be movably connected with the seat portion 124 adjacent to one of the two driving parts 148. For example, the impeding part 204 can be pivotally connected with the seat portion 124 about a pivot axis 212 extending transversally from the left side to the right side of the seat portion 124, and can rotate relative to the seat portion 124 generally parallel to a vertical plane. The impeding part 204 is rotatable relative to the seat portion 124 between a blocking state where the impeding part 204 can interfere with the locking mechanism 140 and prevent the two latches 144 from respectively sliding away from the underside of the two side segments 110A, and a release state where the impeding part 204 allows the two latches 144 to slide away from the underside of the two side segments 110A for unlocking and folding of the child stroller apparatus. For example, the impeding part 204 in the blocking state can engage with the driving part 148 adjacent thereto and thereby prevent the driving part 148 from rotating in a direction that displaces the latch 144 coupled thereto away from the underside of the side segment 110A. According to an example of construction, the impeding part 204 can have a protrusion 204A, which can engage with the driving part 148 in the blocking state and is displaced outside a rotating path of the driving part 148 in the release state. When the impeding part 204 is in the release state, the driving part 148 can accordingly rotate past the protrusion 204A of the impeding part 204 and drive the latch 144 to slide away from the underside of the side segment 110A for unlocking the child stroller apparatus.

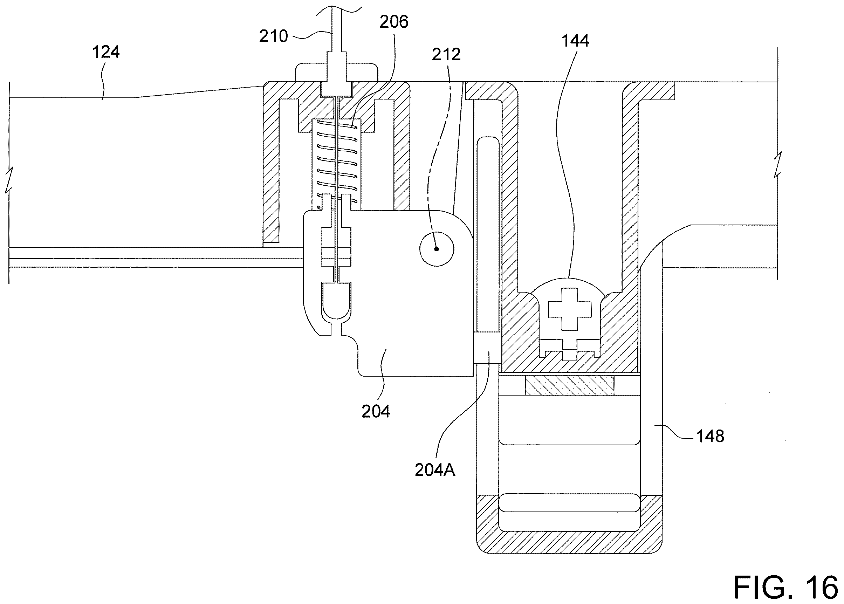

Referring to FIG. 16, the spring 206 can be respectively connected with the seat portion 124 and the impeding part 204. According to an example of construction, the spring 206 can be a compression spring. The spring 206 can bias the impeding part 204 in rotation about the pivot axis 212 toward the blocking state.

Referring to FIGS. 14-17, the actuating part 208 can be provided on the seat support frame 108, and can be exposed above the seat portion 124. According to an example of construction, the resilient part 203 can be fixedly connected with a mounting support 214 disposed above the seat portion 124, and the actuating part 208 can be assembled with the mounting support 214. For example, the mounting support 214 can include a casing, and the actuating part 208 can be pivotally connected with the mounting support 214. Accordingly, the actuating part 208 is depressible to urge the actuating part 208 to rotate relative to the mounting support 214. The actuating part 208 can be connected with the impeding part 204 via the drawing part 210. The drawing part 210 can be a flexible element, e.g., a cable, and can have two opposite ends respectively connected with the impeding part 204 and the actuating part 208. A pressure applied on the actuating part 208 can cause the actuating part 208 to rotate and pull the drawing part 210, which consequently urges the impeding part 204 to move from the blocking state to the release state.

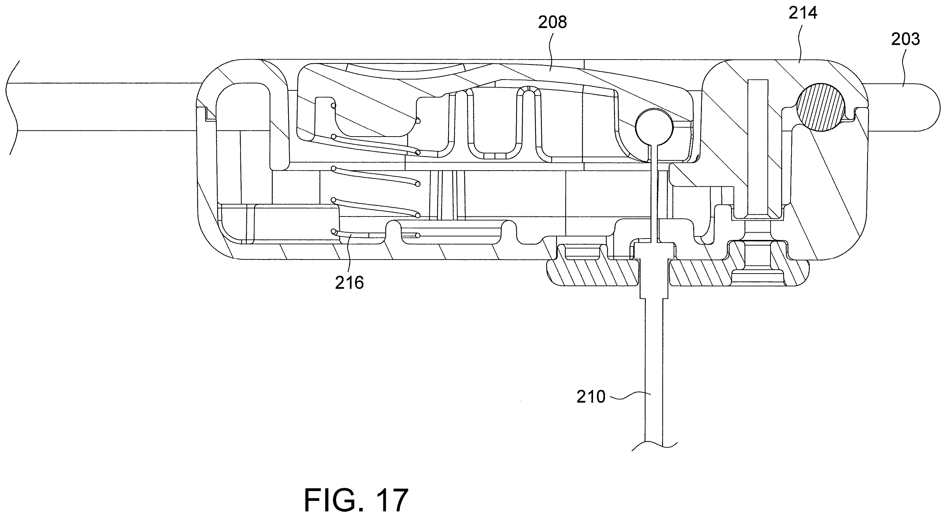

Referring to FIG. 17, a spring 216 can be disposed in the mounting support 214. The spring 216 can be respectively connected with the mounting support 214 and the actuating part 208. While the impeding part 204 is in the blocking state, the actuating part 208 can be maintained in an initial position owing to a biasing action applied by the spring 216 on the actuating part 208.

Referring to FIGS. 14-17, when the child stroller apparatus is to be folded, a caregiver needs to proceed with two operating steps: pressing the actuating part 208 to rotationally switch the impeding part 204 from the blocking state to the release state, and then pull the release actuator 150 while the impeding part 204 remains in the release state so that each driving part 148 is urged to rotate and drive movement of the latch 144 coupled thereto from the locking position to the unlocking position. After the latches 144 unlock, the caregiver can release the actuating part 208 and lift the child stroller apparatus above a floor surface with the release actuator 150, and the child stroller apparatus then can fold with the assistance of gravity action.

When the child stroller apparatus is unfolded, each latch 144 can slide to the locking position below the side segment 110A owing to the biasing force of the spring 146 coupled thereto. In the meantime, the impeding part 204 can move from the release state to the blocking state owing to the biasing force of the spring 206.

Advantages of the structures described herein include the ability to provide a safety lock mechanism that is convenient to operate and can effectively prevent accidental unlocking and folding of a child stroller apparatus. Accordingly, the child stroller apparatus can be safer in use.

Moreover, the present application includes the following embodiments:
Embodiment 1. A child stroller apparatus comprising: a first and a second leg frame, and a first and a second seat support frame, the first seat support frame being pivotally coupled to the first leg frame and the second seat support frame being pivotally coupled to the second leg frame, the first and second seat support frames further being pivotally coupled to each other, whereby the child stroller apparatus has a foldable frame structure, wherein the first seat support frame includes a seat portion, and the second seat support frame includes a side segment that is pivotally coupled to the seat portion; a locking mechanism operable to lock the child stroller apparatus in an unfolded state, wherein the locking mechanism includes a latch, a driving part and a release actuator, the latch being slidably connected with the seat portion, the driving part being pivotally connected with the seat portion and connected with the latch, and the release actuator being connected with the driving part and extending above the seat portion, the latch being slidable to an underside of the side segment for locking the child stroller apparatus in the unfolded state, and the release actuator being operable to cause the driving part to rotate so that the driving part urges the latch to slide away from the underside of the side segment; an impeding part movably connected with the seat portion, the impeding part being movable relative to the seat portion between a blocking state and a release state, the impeding part interfering with the locking mechanism in the blocking state to prevent the latch from sliding away from the underside of the side segment, and the impeding part in the release state allowing the latch to slide away from the underside of the side segment for unlocking and folding of the child stroller apparatus; and an actuating part provided on the first seat support frame and exposed above the seat portion, the actuating part being depressible to urge the impeding part to move from the blocking state to the release state.
Embodiment 2. The child stroller apparatus according to embodiment 1, wherein the impeding part engages with the driving part in the blocking state and thereby prevents the driving part from rotating in a direction that displaces the latch away from the underside of the side segment, and the impeding part in the release state allows the driving part to rotate and drive the latch to slide away from the underside of the side segment for unlocking and folding of the child stroller apparatus.
Embodiment 3. The child stroller apparatus according to embodiment 1 or 2, wherein the actuating part is connected with the impeding part via a flexible drawing part.
Embodiment 4. The child stroller apparatus according to embodiment 1 or 2, wherein the impeding part is pivotally connected with the seat portion.
Embodiment 5. The child stroller apparatus according to embodiment 4, wherein the impeding part has a pivot axis extending transversally relative to the seat portion, and the driving part has a pivot axis extending from a front to a rear of the seat portion.
Embodiment 6. The child stroller apparatus according to any one of embodiments 1 to 5, wherein the first seat support frame further includes a resilient part having a linear profile, the resilient part being fixedly attached to the seat portion and extending above the seat portion, the resilient part being fixedly connected with a mounting support, and the actuating part being assembled with the mounting support.
Embodiment 7. The child stroller apparatus according to embodiment 1, wherein the impeding part abuts against an inner end of the latch in the blocking state and thereby prevents the latch from sliding away from the underside of the side segment, and the impeding part allows the latch to slide away from the underside of the side segment in the release state for unlocking and folding of the child stroller apparatus.
Embodiment 8. The child stroller apparatus according to embodiment 7, wherein the actuating part is fixedly connected with the impeding part.
Embodiment 9. The child stroller apparatus according to embodiment 7 or 8, wherein the impeding part is slidably and rotatably connected with the seat portion.
Embodiment 10. The child stroller apparatus according to embodiment 7, 8 or 9, wherein the impeding part has a guide slot, and a pin fixedly connected with the seat portion is received through the guide slot, whereby the impeding part is slidable relative to the seat portion and rotatable about the pin.
Embodiment 11. The child stroller apparatus according to any one of embodiments 7 to 10, wherein the seat portion is fixedly connected with a stop wall, and the impeding part has a flange, the flange of the impeding part being engaged with the stop wall in the blocking state to prevent the impeding part from rotating toward an inner side of the seat portion and away from the inner end of the latch, and the impeding part being slidable downward from the blocking state to the release state to disengage the flange from the stop wall and thereby allow rotation of the impeding part toward the inner side of the seat portion.
Embodiment 12. The child stroller apparatus according to embodiment 11, wherein while the impeding part is in the release state, the latch is movable away from the underside of the side segment to push the impeding part in rotation toward the inner side of the seat portion.
Embodiment 13. The child stroller apparatus according to embodiment 7, wherein the impeding part is pivotally connected with the seat portion about a pivot axis that extends transversally from a left side to a right side of the seat portion.
Embodiment 14. The child stroller apparatus according to embodiment 13, wherein the impeding part has a stop portion, the stop portion facing and abutting against the inner end of the latch in the blocking state for preventing the latch from sliding away from the underside of the side segment, and a rotation of the impeding part from the blocking state to the release state displaces the stop portion out of a sliding path of the latch so that the latch is allowed to slide toward an inner side of the seat portion.
Embodiment 15. The child stroller apparatus according to embodiment 13 or 14, wherein the actuating part is pivotally connected with the seat portion about a pivot axis that differs from the pivot axis of the impeding part.

Realizations of the child stroller apparatus have been described in the context of particular embodiments. These embodiments are meant to be illustrative and not limiting. Many variations, modifications, additions, and improvements are possible. These and other variations, modifications, additions, and improvements may fall within the scope of the inventions as defined in the claims that follow.

## Claims

1. A child stroller apparatus (100) comprising:
a first and a second leg frame (102, 104), and a first and a second seat support frame (108, 110), the first seat support frame (108) being pivotally coupled to the first leg frame (102) and the second seat support frame (110) being pivotally coupled to the second leg frame (104), the first and second seat support frames (108, 110) further being pivotally coupled to each other, whereby the child stroller apparatus (100) has a foldable frame structure, wherein the first seat support frame (108) includes a seat portion (124), and the second seat support frame (110) includes a side segment (110A) that is pivotally coupled to the seat portion (124);
a locking mechanism (140) operable to lock the child stroller apparatus (100) in an unfolded state, wherein the locking mechanism (140) includes a latch (144) slidably connected with the seat portion (124), the latch (144) being slidable to an underside of the side segment (110A) for locking the child stroller apparatus (100) in the unfolded state and slidable away from the underside of the side segment (110A) for folding of the child stroller apparatus (100);
an impeding part (178) connected with the seat portion (124), the impeding part (178) being movable relative to the seat portion (124) between a blocking state and a release state, the impeding part (178) interfering with the locking mechanism (140) in the blocking state to prevent the latch (144) from sliding away from the underside of the side segment (110A), and the impeding part (178) in the release state allowing the latch (144) to slide away from the underside of the side segment (110A) for unlocking and folding of the child stroller apparatus (100); and
an actuating part (182) movably assembled with the seat portion (124) and exposed upward for operation through an opening (124C) provided on an upper surface of the seat portion (124), the actuating part (182) being depressible to urge the impeding part (178) to move from the blocking state to the release state;
wherein the opening (124C) and the actuating part (182) are disposed at a middle position between a left and a right side edge of the seat portion (124).

2. The child stroller apparatus (100) according to claim 1, wherein the impeding part (178) abuts against the inner end of the latch (144) in the blocking state to prevent the latch (144) from sliding away from the underside of the side segment (110A), and the impeding part (178) allows the latch (144) to slide away from the underside of the side segment (110A) in the release state for unlocking and folding of the child stroller apparatus (100).

3. The child stroller apparatus (100) according to claim 1 or 2, wherein the opening (124C) and the actuating part (182) are placed adjacent to a rear edge of the seat portion (124).

4. The child stroller apparatus (100) according to any one of claims 1 to 3, wherein the impeding part (178) is pivotally connected with the seat portion (124) about a pivot axis (184) that extends transversally from a left side to a right side of the seat portion (124).

5. The child stroller apparatus (100) according to claim 4, wherein the actuating part (182) is pivotally connected with the seat portion (124) about a pivot axis that differs from the pivot axis (184) of the impeding part (178).

6. The child stroller apparatus (100) according to claim 4 or 5, further including a spring (180) connected with the impeding part (178) and the seat portion (124), the spring (180) rotationally biasing the impeding part (178) toward the blocking state.

7. The child stroller apparatus (100) according to any one of claims 4 to 6, wherein the impeding part (178) has a stop portion (190), the stop portion (190) facing and abutting against the inner end of the latch (144) in the blocking state for preventing the latch (144) from sliding away from the underside of the side segment (110A), and a rotation of the impeding part (178) from the blocking state to the release state displaces the stop portion (190) out of a sliding path of the latch (144) so that the latch (144) is allowed to slide toward an inner side of the seat portion (124).

8. The child stroller apparatus (100) according to claim 7, wherein the impeding part (178) extends along a width direction of the seat portion (124), and the stop portion (190) is provided at an end of the impeding part (178) eccentric from the pivot axis (184).

9. The child stroller apparatus (100) according to any one of claims 4 to 8, wherein the actuating part (182) is operable to contact a central portion (192) of the impeding part (178) for urging the impeding part (178) to rotate to the release state.

10. The child stroller apparatus (100) according to any one of claims 1 to 9, further including a restore spring (194) respectively connected with the actuating part (182) and the seat portion (124), the restore spring (194) being adapted to urge the actuating part (182) to recover an initial position when the actuating part (182) is released by a caregiver.

11. The child stroller apparatus (100) according to any one of claims 1 to 10, wherein the actuating part (182) is generally flush with an upper surface of the seat portion (124) while the impeding part (178) is in the blocking state.

12. The child stroller apparatus (100) according to any one of claims 1 to 11, wherein the locking mechanism (140) further includes a driving part (148) and a release actuator (150), the driving part (148) being pivotally connected with the seat portion (124) and connected with the latch (144), and the release actuator (150) being connected with the driving part (148) and extending above the seat portion (124), the release actuator (150) being operable to cause the driving part (148) to rotate so that the driving part (148) urges the latch (144) to slide away from the underside of the side segment (110A).

13. The child stroller apparatus (100) according to claim 12, wherein the release actuator (150) extends above the actuating part (182).

14. The child stroller apparatus (100) according to claim 12 or 13, wherein the release actuator (150) is a strap and has an end connected with the driving part (148).

15. The child stroller apparatus (100) according to any one of claims 1 to 14, wherein the locking mechanism (140) further includes a spring (146) connected with the latch (144), the spring (146) being adapted to bias the latch (144) to slide to the underside of the side segment (110A).
